# EUROPEAN PATENT SPECIFICATION

(11) **EP 2 378 743 B1**
(45) Date of publication and mention of the grant of the patent: **04.09.2013**
(21) Application number: 11160982.2
(22) Date of filing: 04.04.2011
(51) Int. Cl.: H04M 1/04, H04M 1/02

(54) **Foldable stand for portable handheld electronic device**
Faltbarer Ständer für tragbare elektronische Vorrichtung
Support pliable pour dispositif électronique portable

(30) Priority: 15.04.2010 HK 10103690
(43) Date of publication of application: 19.10.2011
(73) Proprietor: SwitchEasy Limited, Room 314, Sing Win Factory Building Kwun Tong, Kowloon, Hong Kong (CN)
(72) Inventor: Bau, Chi Vun Steven, Hong Kong (CN)
(74) Representative: Johansson, Lars E.

(56) References cited:
- FR-A3- 2 598 536
- US-A- 3 718 308
- US-A- 5 607 135

## Description

### FIELD OF THE INVENTION

The present invention generally relates to a stand for supporting portable handheld electronic devices, and more particularly to a stand being foldable when not being in use.

### BACKGROUND OF THE INVENTION

Due to the convenience for use, portable handheld electronic devices, such as Apple iPhone, personal digital assistant (PDA), digital media players, digital recorders, potable TV, handheld computers, etc., are more and more popular in modern life.

Usually, a user holds such an electronic device with one hand, and operates the same with the other hand. However, after operation on the electronic device is finished, the user would generally put down the electronic device and let the same operate automatically For example, after operation on a digital media player is finished, the user would put down the player and let it play songs automatically. As such an electronic device is covered with smooth and beautiful surface, the delicate finish of the electronic device would be subject to deterioration or damage if the electronic device is put directly on a desk. Besides, due to the smooth surface of the electronic device, there is a risk that the electronic device would slide off from the desk to incur a serious damage. Therefore, a stand is needed to support the electronic devices stably.

Furthermore, to demonstrate the new functions of such portable handheld electronic devices to potential customers, stands for supporting the electronic devices are also demanded.

Although there are some kinds of stands available in the market, such stands are unfoldable and would occupy a lot of space, which makes it difficult to store and deliver such stands. Foldable stands are known per se, intended for different purposes and therefore not suitable in connection with electronic devices, e.g. US5607135 which presents a foldable stand for tablets, lacking any cover, and US3718308 intended for support of books, lacking a compact foldable design.

Therefore, it is desirable to have a foldable stand for portable handheld electronic devices, which could be used to support electronic devices in an unfolded state, while be easy for storage or delivery after being folded.

### SUMMARY OF THE INVENTION

To overcome the above-mentioned faults, the present invention aims to provide a foldable stand for portable handheld electronic device which may comprise: a base into an upper surface of which a groove is formed; a cover pivotably connected to the base for covering the upper surface of the base; a strut pivotably connected to the cover at an upper edge thereof and slidably mounted in the groove at a lower edge thereof; in which the groove is formed in such a manner that it could contain the strut when the cover is closed with respect to the base.

Preferably, a projection could be formed outwards from each side of the strut at the lower edge thereof, while a concave could be formed into the base around the groove at the lower part of the groove, in which the length from a tip of one projection to the other is slightly larger than the width of the groove to enable the projections to engage with the concave.

Preferably, a protrusion may be formed upwards from a front edge of the base.

Preferably, a lump could be formed on a surface of the strut facing to the cover, while a corresponding hole could be formed in the cover to contain the lump when the stand is in the folded state, in which the size of the lump is slightly larger than that of the hole.

### BRIEF DESCRIPTION OF THE DRAWINGS

The present invention will be described in details with reference to the accompanying drawings, in which:
Fig.1 is a perspective view of an embodiment of the foldable stand for portable handheld electronic device according to the present invention;
Fig. 2 is a side view of the foldable stand shown in Fig. 1;
Fig. 3 is a perspective view of the foldable stand for portable handheld electronic device in a folded state;
Fig. 4 is a bottom view of the foldable stand shown in Fig. 3; and
Fig. 5 illustrates the use of the foldable stand for portable handheld electronic device according to the present invention.

### DETAILED DESCRIPTION OF THE INVENTION

The aspects, features and advantages of the present invention will be better understood by those skilled in the art from the detailed description of the embodiments of the invention in conjunction with the accompanying drawings. Exemplary embodiments of the present application and the description thereof are for illustration purpose only, and should not be construed as limitation to the protective scope of the present invention.

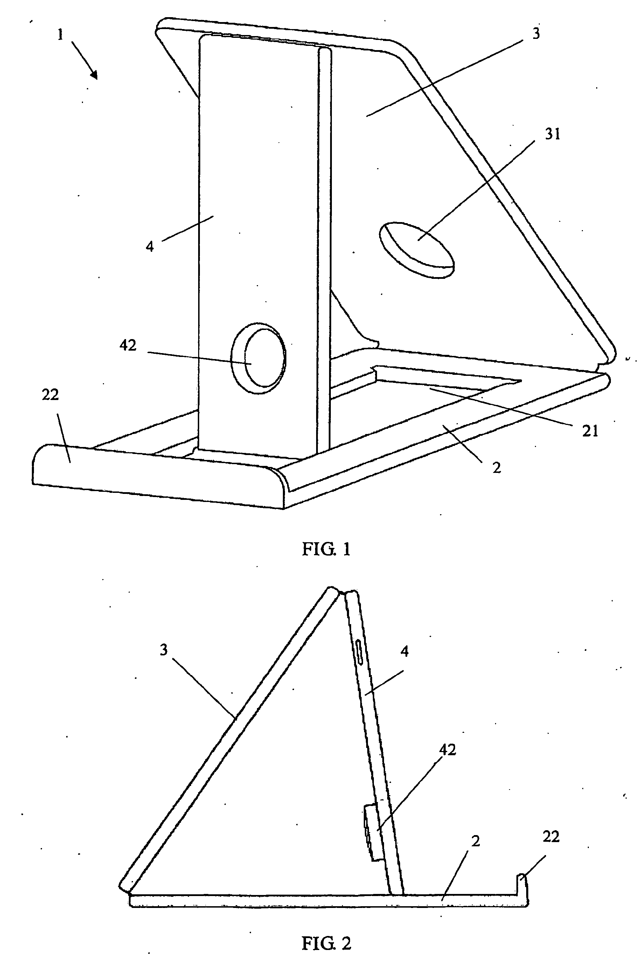

Fig. 1 illustrates an embodiment of the foldable stand for portable handheld electronic device according to the present invention. As shown in Fig. 1, the stand 1 comprises a base 2 and a cover 3 pivotably connected to the base 2. The cover 3 could be connected to the base 2 by virtue of a pivot, a hinge or other means known in this art. Or, the cover 3 could be formed integrally with the base 2 and a joint part therebetween is relative thinner than the other parts, to enable the cover 3 to be pivotable with respect to the base 2.

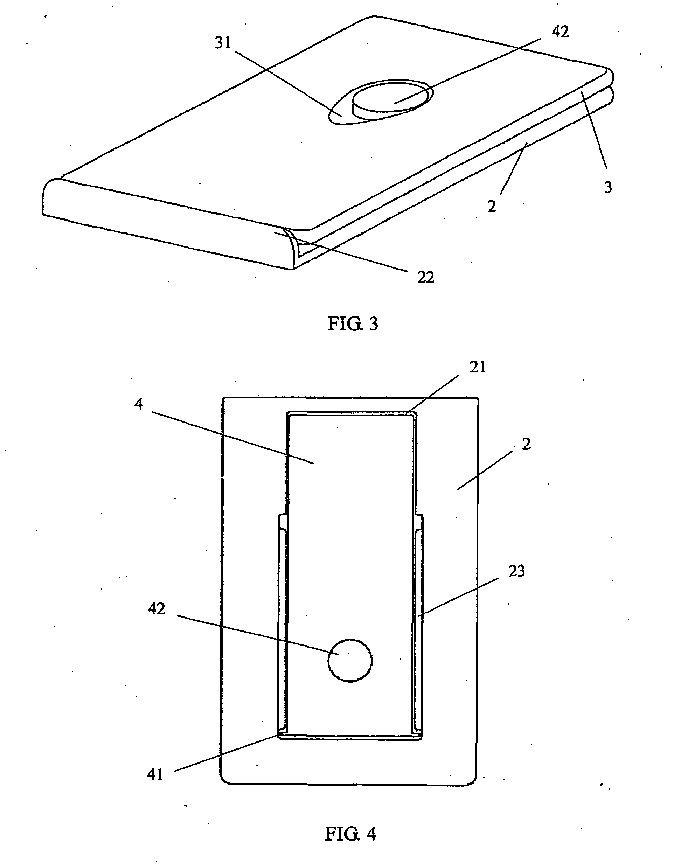

A groove 21 is formed into an upper surface of the base 2 between the base 2 and the cover 3, and a strut 4 is pivotably connected to the cover 3 at an upper edge thereof, while is slidably mounted in the groove 21 at a lower edge thereof. The groove 21 is formed in such a manner that it could contain the whole strut 4 when the cover 3 is closed with respect to the base 2, as shown in Fig. 3. The groove 21 could be formed into part of the thickness of the base 2, or be formed through the whole thickness thereof.

The base 2, the cover 3, and the strut 4 could be made of, such as plastics, rubbers, metals, ceramics, or other suitable materials.

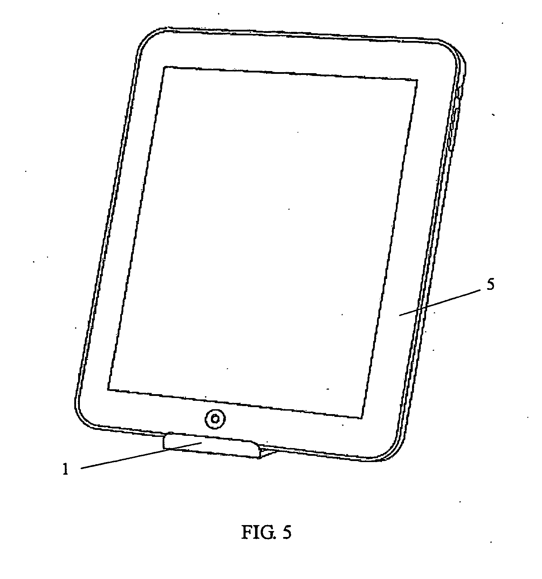

To form the configuration of Fig. 1 from a folded state of Fig. 3, the cover 3 would first be opened by pivoting it around the base 2. With the opening of the cover 3, the strut 4 would be pivoted around the cover 3 on one hand, and the lower edge of the strut 4 would slide along the groove 21 on the other hand. Finally, the base 2, the cover 3 and strut 4 would form a stable triangle, just like the configuration of Fig. 1. As a result, as shown in Fig. 5, an electronic device 5 could be supported on the stand 1, in which one side of the device presses against the base 2 and the back of the device rests on the strut 4 or presses against the cover 3.

To prevent the electronic device 5 from sliding off from the base 2, a protrusion 22 could be formed upwards from the front edge of the base 2.

As shown in Fig. 4, a projection 41 may extend outwards from each side of the strut 4 at the lower edge thereof, while a concave 23 may be formed into the base 2 around the groove 21 at the lower part of the groove 21. The total length from the tip of one projection to the other is slightly larger than the width of the groove 21. Thus, the projection 41 could engage with the concave 23 to prevent the lower edge of the strut 4 from being pulled out from the groove 21.

As clearly shown in Fig. 2, a lump 42 could be formed on a surface of the strut 4 facing to the cover 3, while a corresponding hole 31 could be formed in the cover 3 to contain the lump 42 when the stand is in the folded state. The size of the lump 42 is slight larger than that of the hole 31, thus after the lump 42 is pressed into the hole 31, the stand would not be unfolded accidentally.

Although some embodiments of the present invention have been shown and described with reference to the accompanying drawings, those skilled in the art should understand that various changes and modifications can be made to the embodiments without departing the principles of the present invention and they still fall into the scope of claims and the equivalent thereof.

## Claims

1. A foldable stand for portable handheld electronic device comprising:
a base (2) into an upper surface of which a groove (21) is formed;
a cover (3) pivotable connected to the base (2) for covering the upper surface of the base;
a strut (4) pivotably connected to the cover (3) at an upper edge thereof and slidably mounted in the groove (21) at a lower edge thereof; **characterized in that** the groove (21) has a form arranged to contain the whole strut (4) when the cover (3) is closed with respect to the base (2) and wherein a projection (41) is formed outwards from each side of the strut (4) at the lower edge thereof, while a concave (23) is formed into the base (2) around the groove (21) at the lower part of the groove (21), in which the length from a tip of one projection (41) to the other is larger than the width of the groove (21) to enable the projections to engage with the concave (23).

2. The foldable stand according to claim 1, wherein a protrusion (22) is formed upwards from a front edge of the base (2).

3. The foldable stand according to claim 1 wherein a lump (42) is formed on a surface of the strut (4) facing to the cove (3), while a corresponding hole (31) is formed in the cover (3) to contain the lump (42) when the stand is in the folded state, in which the size of the lump (42) is larger than that of the hole (31).

4. The foldable stand according to claim 2 wherein a lump (42) is formed on a surface of the strut (4) facing to the cover (3), while a corresponding hole (31) is formed in the cover (3) to contain the lump (42) when the stand is in the folded state, in which the size of the lump (42) is larger than that of the hole (31).

## Patentansprüche

1. Faltbarer Ständer für ein tragbares, handgehaltenes elektronisches Gerät,
aufweisend:
eine Basis (2) mit einer in einer Basisoberseite ausgebildeten Nut (21);
einen Deckel (3), der mit der Basis (2) zum Abdecken der Basisoberseite schwenkbar verbunden ist;
eine Stütze (4), die mit dem Deckel (3) an einem oberen Deckelrand schwenkbar und in der Nut (21) an einem unteren Deckelrand verschiebbar verbunden ist; **dadurch gekennzeichnet, dass**
die Nut (21) eine Form aufweist, die dazu ausgelegt ist, die gesamte Stütze (4) aufzunehmen, wenn der Deckel (3) in Bezug auf die Basis (2) geschlossen ist, und wobei ein Vorsprung (41) außerhalb jeder Seite der Stütze (4) am unteren Stützenrand gebildet ist, während in der Basis (2) um die Nut (21) am unteren Teil der Nut (21) eine Einbuchtung (23) gebildet ist, wobei die Länge von einem Vorderende von einem Vorsprung (41) zum anderen größer als die Breite der Nut (21) ist, damit die Vorsprünge in die Ausbuchtung eingreifen können.

2. Faltbarer Ständer nach Anspruch 1, wobei oberhalb eines Vorderrands der Basis (2) ein Vorsprung (22) gebildet ist.

3. Faltbarer Ständer nach Anspruch 1, wobei auf einer Oberfläche der Stütze (4) zum Deckel (3) weisend ein Ansatz (42) gebildet ist, während in dem Deckel (3) ein entsprechender Durchbruch (31) zur Aufnahme der Ansatzes (42) gebildet ist, wenn der Ständer sich im zusammengefalteten Zustand befindet, wobei der Ansatz (42) größer ist als der Durchbruch (31).

4. Faltbarer Ständer nach Anspruch 2, wobei auf einer Oberfläche der Stütze (4) zum Deckel (3) weisend ein Ansatz (42) gebildet ist, während in dem Deckel (3) ein entsprechender Durchbruch (31) zur Aufnahme der Ansatzes (42) gebildet ist, wenn der Ständer sich im zusammengefalteten Zustand befindet, wobei der Ansatz (42) größer ist als der Durchbruch (31).

## Revendications

1. Un support pliant pour appareil électronique portable comprenant :
une embase (2) dans une surface supérieure de laquelle est formée une rainure (21) ;
un couvercle (3) relié de manière pivotante à l'embase (2), destiné à recouvrir la surface supérieure de l'embase ;
une entretoise (4) reliée de façon pivotante au couvercle (3), au niveau d'un bord supérieur de celui-ci et montée coulissante dans la rainure (21) au niveau d'un bord inférieur de celle-ci, **caractérisé en ce que**
la rainure (21) a une forme agencée pour contenir toute l'entretoise (4) lorsque le couvercle (3) est fermé par rapport à l'embase (2), et une saillie (41) est formée vers l'extérieur de chaque côté de l'entretoise (4), au niveau du bord inférieur de celle-ci,
tandis qu'une concavité (23) est formée dans l'embase (2) autour de la rainure (21) à la partie inférieure de la rainure (21), la longueur d'une saillie (41) depuis une extrémité à l'autre est plus grande que la largeur de la rainure (21) pour permettre aux saillies de venir en engagement avec la partie concave (23).

2. Le support pliant selon la revendication 1, dans lequel une saillie (22) est formée vers le haut à partir d'un bord avant de l'embase (2).

3. Le support pliant selon la revendication 1, dans lequel un bossage (42) est formé sur une surface de l'entretoise (4) faisant face au couvercle (3), tandis qu'un trou (31) correspondant est formé dans le couvercle (3) pour contenir le bossage (42) lorsque le support est dans l'état plié, la taille du bossage (42) étant plus grande que celle du trou (31).

4. Le support pliant selon la revendication 2, dans lequel un bossage (42) est formé sur une surface de l'entretoise (4) faisant face au couvercle (3), tandis qu'un trou (31) correspondant est formé dans le couvercle (3) pour contenir le bossage (42) lorsque le support est dans l'état plié, la taille du bossage (42) étant plus grande que celle du trou (31).
